# EUROPEAN PATENT APPLICATION

(11) **EP 2 280 529 A1**
(43) Date of publication of application: **02.02.2011**
(21) Application number: 10168289.6
(22) Date of filing: 02.07.2010
(51) Int. Cl.: H04M 1/02

(54) **Portable Terminal**

(30) Priority: 02.07.2009 JP 2009157522
(71) Applicant: Funai Electric Co., Ltd., Daito-shi, Osaka 574-0013 (JP)
(72) Inventor: Yamagiwa, Daisuke, Daito-shi Osaka 574-0013 (JP); Nishigori, Yoshihisa, Daito-shi Osaka 574-0013 (JP); Shingin, Yasuhiro, Daito-shi Osaka 574-0013 (JP); Jinno, Seiki, Daito-shi Osaka 574-0013 (JP)
(74) Representative: Grünecker, Kinkeldey, Stockmair & Schwanhäusser Anwaltssozietät

(57) **Abstract**

This portable terminal (100) includes an operating portion-side housing (13) provided with a first operating key (15, 215, 315) capable of switchably displaying a plurality of display patterns, a display portion-side housing (33), provided to be relatively slidingly movable with respect to the operating portion-side housing (13), including a display portion (34) and a control portion (14a) switching the display patterns of the first operating key (15, 215, 315) in response to a sliding movement position of the display portion-side housing (33) with respect to the operating portion-side housing (13).

## Description

### BACKGROUND OF THE INVENTION

### Field of the Invention

The present invention relates to a portable terminal, and more particularly, it relates to a portable terminal provided with an operating key capable of switchably displaying a plurality of display patterns.

### Description of the Background Art

In general, a portable terminal provided with an operating key capable of switchably displaying a plurality of display patterns is disclosed in each of Japanese Patent Laying-Open Nos. 2004-355368, 2004-153570, 2008-9526 and 2008-304875, for example.

The aforementioned Japanese Patent Laying-Open No. 2004-355368 discloses a portable telephone including a display including an illuminator capable of emitting three light components having different wavelengths and three selective display portions provided with transmission portions having display shapes of numerals, kana characters and alphabetic characters respectively and mask portions surrounding the transmission portions respectively and operating buttons arranged on an upper portion of the display. In the portable telephone described in the aforementioned Japanese Patent Laying-Open No. 2004-355368, the wavelength of the light component emitted from the illuminator is so selected as to display any of numerals, *kana* characters and alphabetic characters on the display in response to an input mode for the operating buttons. Thus, the portable telephone is formed to be capable of switchably displaying three display patterns on the operating buttons. Although not clearly described in the aforementioned Japanese Patent Laying-Open No. 2004-355368, the portable telephone is conceivably so formed that, in order to switch the input mode from a state where numerals are displayed on the operating buttons to a state where characters (*kana* characters and/or alphabetic characters) are displayed thereon, the user starts prescribed software (application) for inputting characters and presses down an operating button for switching the input mode thereby switching the portable telephone to the state where the characters for entry are displayed on the operating buttons.

The aforementioned Japanese Patent Laying-Open No. 2004-153570 discloses a portable telephone including buttons including a longitudinal-wave LED (light-emitting diode) portion emitting only longitudinal-wave light, a transverse-wave LED portion emitting only transverse-wave light and an illumination light passage window and a control portion switching a character input mode and controlling the portable telephone to change the LED portion for emitting light when the user presses down an input character type switching button. In the portable telephone described in the aforementioned Japanese Patent Laying-Open No. 2004-153570, alphabetic patterns covered with only a longitudinal-wave filter transmitting only the longitudinal-wave light and hiragana patterns covered with only a transverse-wave filter transmitting only the transverse-wave light are formed on the illumination light passage window. Thus, the control portion so selects the LED portion for emitting light as to display either alphabetic characters or *hiragana* characters on the buttons in response to the character input mode. Consequently, the portable telephone is formed to be capable of switchably displaying two display patterns on the buttons. Although not clearly described in the aforementioned Japanese Patent Laying-Open No. 2004-153570, the portable telephone is conceivably so formed that the user switches the display of the alphabetic characters or the hiragana characters on the buttons by pressing down an input character type switching button in a state starting prescribed software for inputting characters.

The aforementioned Japanese Patent Laying-Open No. 2008-9526 discloses a mobile radio terminal including key tops including a green LED capable of emitting green light, a red LED capable of emitting red light, a first mask screen sheet, whose hiragana portions are cut out, not transmitting the green light and a second mask screen sheet, whose alphabetic portions are cut out, not transmitting the red light and a control portion. In the mobile radio terminal described in the aforementioned Japanese Patent Laying-Open No. 2008-9526, the control portion so selects the LED for emitting light as to display either green hiragana characters or red alphabetic characters on the key tops in response to an input mode. Thus, the mobile radio terminal is formed to be capable of switchably displaying two display patterns on the key tops. Further, the mobile radio terminal described in the aforementioned Japanese Patent Laying-Open No. 2008-9526 is formed to switch the input mode by a mode switching instruction received from the user. The aforementioned Japanese Patent Laying-Open No. 2008-9526 describes that the mobile radio terminal may be so formed as to automatically switch the input mode by controlling a program without receiving the mode switching instruction from the user. Although not clearly described in the aforementioned Japanese Patent Laying-Open No. 2008-9526, the mobile radio terminal is conceivably formed to switch the display of alphabetic or *hiragana* characters on the key tops automatically or by the mode switching instruction from the user in a state where the user starts prescribed software for inputting characters.

The aforementioned Japanese Patent Laying-Open No. 2008-304875 discloses a portable telephone including an operating portion including three light sources capable of emitting three light components having different wavelengths respectively and three notch filters arranged on upper portions of the light sources and a control portion. In the portable telephone described in the aforementioned Japanese Patent Laying-Open No. 2008-304875, numerical, hiragana and alphabetic display shapes are marked on the three notch filters respectively, and the portable telephone is formed to attenuate any of the three light components in a portion other than the corresponding display shape. Thus, the control portion so selects the light source for emitting light as to display any of the numerical, hiragana and alphabetic display shapes on the operating portion in response to an input mode for the operating portion. Thus, the portable telephone is formed to be capable of switchably displaying three display patterns on the operating portion. Further, the portable telephone described in the aforementioned Japanese Patent Laying-Open No. 2008-304875 is so formed that the input mode thereof is switched when the user presses down an input mode changing key while corresponding input modes are automatically selected and switched when the user makes a telephone call and writes an E-mail respectively. Although not clearly described in the aforementioned Japanese Patent Laying-Open No. 2008-304875, the portable telephone is conceivably so formed that, when the portable telephone is switched from a state where the operating portion displays numerals to a state where the same displays characters (hiragana or alphabetic characters), the portable telephone is switched to the state where the operating portion displays characters automatically or by an operation of the user pressing down an input mode changing key in a state where the user starts prescribed software for inputting characters.

A folding or sliding portable telephone (portable terminal or portable apparatus) is known as the prior art. For example, a sliding portable telephone is so formed that the user slides a display portion-side housing including a display portion with respect to an operating portion-side housing provided with operating keys (operating buttons) in a prescribed direction and thereafter performs an operation (input) with the operating keys (operating buttons) in use.

When the portable telephone described in the aforementioned Japanese Patent Laying-Open No. 2004-355368 is so formed that the user starts the prescribed software (application) for inputting characters and presses down the operating button for switching the input mode thereby switching the input mode from the state where numerals are displayed on the operating buttons to the state where characters are displayed thereon, however, the user is disadvantageously required to perform the software starting operation and the operation of switching the input mode by pressing down the operating button in order to switch the display pattern. When this structure of the portable telephone described in Japanese Patent Laying-Open No. 2004-355368 is applied to a sliding portable telephone, the user is conceivably further required to perform the software starting operation and the operation of switching the input mode by pressing down the operating button after sliding the display portion-side housing with respect to the operating portion-side housing in the prescribed direction. Therefore, the user must conceivably perform complicated operations in order to switch the display pattern.

When the portable telephone described in the aforementioned Japanese Patent Laying-Open No. 2004-153570 is so formed that the user switches the display of the alphabetic characters or the hiragana characters on the buttons by pressing down the input character type switching button in the state starting the prescribed software for inputting characters, the user is disadvantageously required to perform the software starting operation and an operation of switching the input mode by pressing down the input character type switching button in order to switch the display (display pattern) of the alphabetic characters or the hiragana characters on the buttons. When this structure of the portable telephone described in Japanese Patent Laying-Open No. 2004-153570 is applied to a sliding portable telephone, the user is conceivably further required to perform the software starting operation and the operation of switching the input mode by pressing down the input character type switching button after sliding the display portion-side housing with respect to the operating portion-side housing in the prescribed direction. Therefore, the user must conceivably perform complicated operations in order to switch the display pattern.

When the mobile radio terminal described in the aforementioned Japanese Patent Laying-Open No. 2008-9526 is so formed that the display of alphabetic or *hiragana* characters on the key tops is switched automatically or by the mode switching instruction from the user in the state where the user starts the prescribed software for inputting characters, the user is conceivably required to at least perform the software starting operation and must perform the operation for the mode switching instruction himself/herself as the case may be, in order to switch the display (display pattern) of alphabetic or *hiragana* characters on the buttons. When this structure of the mobile radio terminal described in Japanese Patent Laying-Open No. 2008-9526 is applied to a sliding portable telephone, the user may conceivably be further required to perform the software starting operation and the operation for the mode switching instruction after sliding the display portion-side housing with respect to the operating portion-side housing in the prescribed direction. Therefore, the user must conceivably perform complicated operations in order to switch the display pattern.

When the portable telephone described in the aforementioned Japanese Patent Laying-Open No. 2008-304875 is formed to be switched from the state where the operating portion displays numerals to the state where the same displays characters automatically or by the operation of the user pressing down the input mode changing key, the user is conceivably required to perform at least the software starting operation and must perform the operation for switching the input mode by pressing down the input mode changing key himself/herself as the case may be, in order to switch the portable telephone from the state where the operating portion displays numerals to the state where the same displays characters. When this structure of the portable telephone described in Japanese Patent Laying-Open No. 2008-304875 is applied to a sliding telephone, the user may conceivably be further required to perform the software starting operation and the operation for switching the input mode by pressing down the input mode changing key after sliding the display portion-side housing with respect to the operating portion-side housing in the prescribed direction. Therefore, the user must conceivably perform complicated operations in order to switch the display pattern.

### SUMMARY OF THE INVENTION

The present invention has been proposed in order to solve the aforementioned problems, and an object of the present invention is to provide a portable terminal capable of preventing the user from complicated operations when switching display patterns displayed on operating keys in a sliding portable terminal or a sliding portable apparatus.

A portable terminal according to an aspect of the present invention includes an operating portion-side housing provided with a first operating key capable of switchably displaying a plurality of display patterns, a display portion-side housing, provided to be relatively slidingly movable with respect to the operating portion-side housing, including a display portion, and a control portion switching the display patterns of the first operating key in response to a sliding movement position of the display portion-side housing with respect to the operating portion-side housing.

As hereinabove described, the portable terminal according to the aspect of the present invention is provided with the control portion switching the display patterns of the first operating key in response to the sliding movement position of the display portion-side housing with respect to the operating portion-side housing, whereby the user can switch the display patterns displayed on the first operating key by simply slidingly moving either the display portion-side housing or the operating portion-side housing with respect to either the operating portion-side housing or the display portion-side housing when using the portable terminal, without starting prescribed software (application) for inputting characters. Thus, the user can be prevented from complicated operations when switching the display patterns displayed on the first operating key in the sliding portable terminal. The display patterns on the first operating key can be switched in response to the sliding movement position, whereby the user can display the display patterns suitable to his/her operation on the first operating key.

In the portable terminal according to the aforementioned aspect, the display portion-side housing is preferably formed to be relatively slidingly movable with respect to the operating portion-side housing in a first direction and a second direction orthogonal to the first direction, the portable terminal preferably further includes a first sensor sensing that the display portion-side housing is slidingly moved in the first direction and located on a first sliding movement position and a second sensor sensing that the display portion-side housing is slidingly moved in the second direction and located on a second sliding movement position, and the control portion is preferably formed to switch the display patterns of the first operating key on the basis of results of detection of the first sensor and the second sensor. According to this structure, the portable terminal can easily display the display patterns suitable to the user's operation on the first operating key in response to the first or second sliding movement position of the display portion-side housing with the first or second sensor.

In this case, the portable terminal preferably further includes a first sensing element for detecting the position of the display portion-side housing in the first direction with the first sensor and a second sensing element for detecting the position of the display portion-side housing in the second direction with the second sensor, and the control portion is preferably formed to switch the display patterns of the first operating key in a case where the position of the first sensing element with the first sensor is the first sliding movement position or the position of the second sensing element with the second sensor is the second sliding movement position. According to this structure, the potable terminal can reliably display the display patterns suitable to the user's operation on the first operating key in response to each of the first and second sliding movement positions of the display portion-side housing with each of the first and second sensing elements.

The portable terminal according to the aforementioned aspect is preferably so formed that a state where the display portion-side housing is not slidingly moved with respect to the operating portion-side housing but superposed on the operating portion-side housing in plan view corresponds to an initial position, and the control portion is preferably formed to switch the display patterns of the first operating key in response to a sliding movement position of the display portion-side housing with respect to the operating portion-side housing from the initial position. According to this structure, the user cannot visually recognize displays on the first operating key when the display portion-side housing is arranged on the initial position with respect to the operating portion-side housing, whereby he/se can easily recognize that the display portion-side housing is located on the initial position with respect to the operating portion-side housing.

In the portable terminal according to the aforementioned aspect, the control portion is preferably formed to switch the display patterns of the first operating key in response to software started in the display portion of the display portion-side housing on the first sliding movement position or the second sliding movement position. According to this structure, the portable terminal can display the display patterns suitable to an operation of switched software on the first operating key even if the user switches the started software on the first sliding movement position or the second sliding movement position.

In the portable terminal according to the aforementioned aspect, the control portion is preferably formed to switch the display patterns of the first operating key to a display pattern indicating any of a telephone call mode, a character input mode and a moving picture reproduction mode on the first sliding movement position or the second sliding movement position.

According to this structure, the user can switch the portable terminal to any of the telephone call mode, the character input mode and the moving picture reproduction mode by simply slidingly moving either the display portion-side housing or the operating portion-side housing with respect to either the operating portion-side housing or the display portion-side housing when using the portable terminal.

In this case, the control portion is preferably formed to control the display patterns of the first operating key to be a display pattern corresponding to a telephone call operation on the first sliding movement position when the portable terminal is in the telephone call mode. According to this structure, the portable terminal can display the display patterns corresponding to operation contents of the telephone call mode on the first operating key also when the same is switched to the telephone call mode on the first sliding movement position.

In the aforementioned portable terminal formed to be switchable to any of the telephone call mode, the character input mode and the moving picture reproduction mode, the control portion is preferably formed to control the display patterns of the first operating key to be a display pattern corresponding to a character input operation on the second sliding movement position when the portable terminal is in the character input mode. According to this structure, the portable terminal can display the display patterns corresponding to operation contents of the character input mode on the first operating key also when the same is switched to the character input mode on the second sliding movement position.

In the aforementioned portable terminal formed to be switchable to any of the telephone call mode, the character input mode and the moving picture reproduction mode, the control portion is preferably formed to control the display patterns of the first operating key to be a display pattern corresponding to an operation for reproducing moving pictures on the second sliding movement position when software for reproducing the moving pictures is started. According to this structure, the portable terminal can display the display patterns corresponding to operation contents of the software for reproducing moving pictures on the first operating key also when the software started on the second sliding movement position is switched to the software for reproducing moving pictures.

In this case, the first operating key preferably includes a plurality of key portions, and the control portion is preferably formed to display operating buttons having single significances on the first operating key with the plurality of key portions on the second sliding movement position when the software for reproducing the moving pictures is started. According to this structure, the portable terminal can display a wide key region having the single significances and including a plurality of operating keys, whereby visibility of the operating keys (key region) can be improved.

In the aforementioned portable terminal including the plurality of key portions, the control portion is preferably formed to display the operating buttons having the single significances not only with the plurality of key portions but also with portions, other than the key portions, between the plurality of key portions. According to this structure, the portable terminal can continuously display signs etc. allocated to single key portions with the plurality of key portions and the portions, other than the key portions, between the plurality of key portions also when displaying the operating buttons. Thus, the visibility of a display region including the plurality of key portions can be further improved.

In the aforementioned portable terminal including the plurality of key portions, the respective ones of the key portions are preferably convexly formed, portions between the key portions are preferably concavely formed, and the control portion is preferably formed to display the operating buttons having the single significances not only with the convex key portions but also with the concave portions between the key portions on the second sliding movement position when the software for reproducing the moving pictures is started. According to this structure, the portable terminal can display a wide key region including not only the plurality of key portions but also the concave portions, whereby the visibility of the operating keys (key region) can be further improved.

In the portable terminal according to the aforementioned aspect, the first operating key is preferably formed to display the respective display patterns in different colors when displaying the plurality of display patterns. According to this structure, the user can easily recognize which display pattern the first operating key displays from among the plurality of display patterns corresponding to the sliding movement position.

The portable terminal according to the aforementioned aspect is preferably so formed that a first operating key region of the first operating key is exposed when the display portion-side housing is moved with respect to the operating portion-side housing in the first direction and located on the first sliding movement position and a second operating key region of the first operating key is exposed when the display portion-side housing is moved with respect to the operating portion-side housing in the second direction and located on the second sliding movement position, and the control portion is preferably formed to display a first display pattern on the first operating key in the first operating key region in the state where the first operating key region is exposed and to display a second display pattern on the first operating key in the second operating key region in the state where the second operating key region is exposed. According to this structure, the portable terminal can display the first or second display pattern suitable to the user's operation in response to the first or second operating key region exposed when the display portion-side housing is located on the first or second sliding movement position.

In the portable terminal according to the aforementioned aspect, the display portion-side housing preferably further includes a second operating key capable of switchably displaying a plurality of display patterns, and the control portion is preferably formed to switch the display patterns of the second operating key to correspond to the display patterns of the first operating key on the sliding movement position. According to this structure, the first operating key can display the display patterns suitable to the user's operation and the second operating key provided on the display portion-side housing can display the display patterns corresponding to those displayed on the first operating key provided on the operating portion-side housing.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a first sliding state (telephone call mode) of a portable telephone according to an embodiment of the present invention;
Fig. 2 is an exploded perspective view showing the overall structure of the portable telephone according to the embodiment shown in Fig. 1;
Fig. 3 is a perspective view showing an initial state of the portable telephone according to the embodiment shown in Fig. 1;
Fig. 4 is a perspective view showing a second sliding state (character input mode) of the portable telephone according to the embodiment shown in Fig. 1;
Fig. 5 is a perspective view showing the positional relation between a display portion-side body and an operating portion-side body in the initial state of the portable telephone according to the embodiment shown in Fig. 1;
Fig. 6 is a perspective view showing the positional relation between the display portion-side body and the operating portion-side body in the first sliding state of the portable telephone according to the embodiment shown in Fig. 1;
Fig. 7 is a perspective view showing the positional relation between the operating portion-side body and a sliding plate in the initial state of the portable telephone according to the embodiment shown in Fig. 1;
Fig. 8 is a perspective view showing the positional relation between the operating portion-side body and the sliding plate in the second sliding state of the portable telephone according to the embodiment shown in Fig. 1;
Fig. 9 is a sectional view taken along the lines 1000-1000 in Figs. 5 and 6, showing the positional relation between a first position sensor and a protrusion of the sliding plate;
Fig. 10 is a sectional view taken along the lines 2000-2000 in Figs. 7 and 8, showing the positional relation between a second position sensor and the protrusion of the sliding plate;
Fig. 11 is an exploded perspective view showing the structure of an operating key portion of the portable telephone according to the embodiment shown in Fig. 1;
Fig. 12 is a perspective view showing the second sliding state (moving picture reproduction mode) of the portable telephone according to the embodiment shown in Fig. 1;
Fig. 13 is a block diagram showing the electrical structure of the portable telephone according to the embodiment shown in Fig. 1;
Fig. 14 illustrates a control flow in a mode switching operation of the portable telephone according to the embodiment shown in Fig. 1;
Fig. 15 is a top plan view showing an orange filter layer of a portable telephone according to a first modification of the embodiment of the present invention; and
Fig. 16 is a perspective view showing a portable telephone according to a second modification of the embodiment of the present invention.

### DESCRIPTION OF THE PREFERRED EMBODIMENTS

An embodiment of the present invention is now described with reference to the drawings.

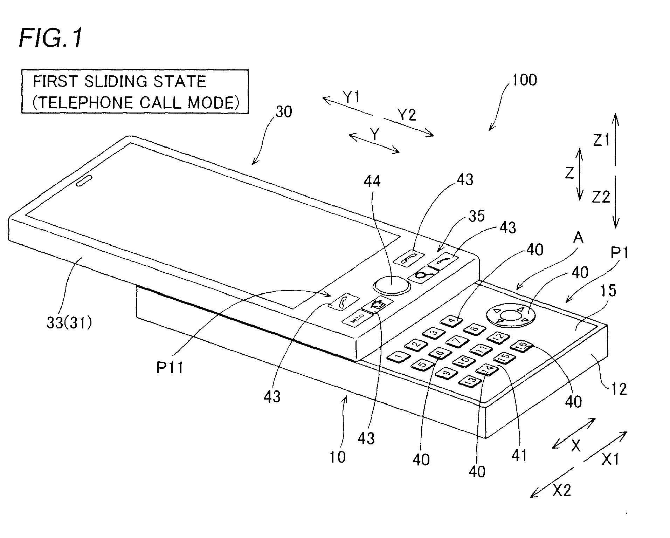

First, the structure of a portable telephone 100 according to the embodiment of the present invention is described with reference to Figs. 1 to 13. The portable telephone 100 is an example of the "portable terminal" in the present invention.

The portable telephone 100 according to the embodiment of the present invention is formed as a portable terminal including a sliding mechanism. In other words, the portable terminal 100 includes an operating portion-side body 10 having a horizontally elongated shape in plan view and a display portion-side body 30 mounted on the upper surface (along arrow Z1) of the operating portion-side body 10 and slidingly movable with respect to the operating portion-side body 10 in directions X and Y, as shown in Fig. 1. Referring to Fig. 1, the display portion-side body 30 is located on a first sliding movement position, and this state is regarded as a first sliding state. The portable telephone 100 is formed to expose a first operating key region A when the same is in the first sliding state. The first sliding movement position is an example of the "sliding movement position" in the present invention, and the first operating key region A is an example of the "first operating key region" in the present invention.

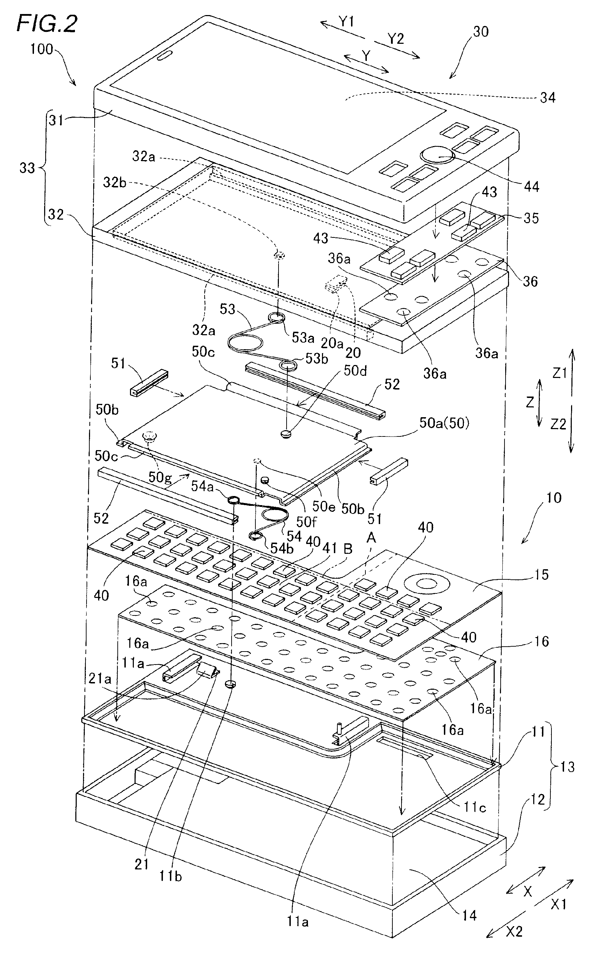

As shown in Fig. 2, the operating portion-side body 10 is provided with an operating portion-side housing 13, an operating circuit board 14, an operating key portion 15 and a switching board 16. The operating portion-side housing 13 is formed by fitting a die-cast lid member 11 of a metal (Mg or Al) into a casing member 12 of resin such as polycarbonate (PC) resin or ABS resin in a direction Z. The operating circuit board 14, stored in the operating portion-side housing 13, enables the portable telephone 100 to implement various functions. The operating key portion 15 in the form of an L-shaped plate (sheet), and arranged to cover a prescribed region of the lid member 11. The operating key portion 15 is an example of the "first operating key" in the present invention.

As shown in Fig. 2, the display portion-side body 30 is provided with a display portion-side housing 33, a display screen portion 34 consisting of a liquid crystal display, a display portion-side operating key portion 35 and a switching board 36. The display portion-side housing 33 is formed by fitting a panel portion 31 of resin such as polycarbonate (PC) resin or ABS resin into a die-cast casing member 32 of a metal (Mg or Al) in the direction Z. The display screen portion 34 is stored in the display portion-side housing 33, and connected with the operating circuit board 14 through an FPC board (not shown). The switching board 36 consists of an FPC board, and is connected with the operating circuit board 14. The portable telephone 100 is so formed that the user operates the same through the operating key portion 15 of the first operating key region A exposed on the upper surface of the operating portion-side body 10 and the display portion-side operating key portion 35 while observing the display screen portion 34 in a state slidingly moving the display portion-side body 30 along arrow Y1, as shown in Fig. 1. The display screen portion 34 is an example of the "display portion" in the present invention, and the display portion-side operating key portion 35 is an example of the "second operating key" in the present invention.

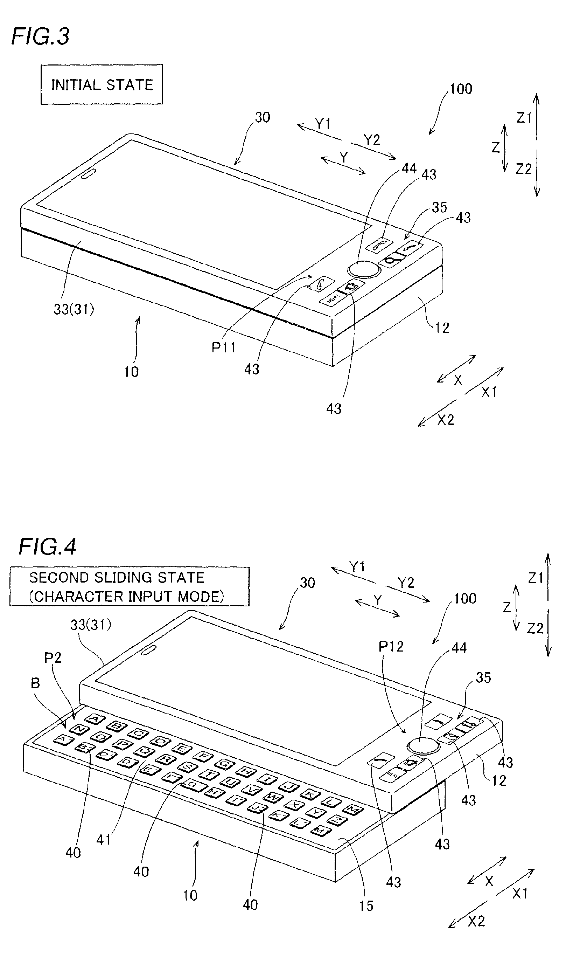

The portable telephone 10 is so formed that the user can retain the same while most reducing the plane area thereof in an initial state by completely superposing the display portion-side body 30 on the operating portion-side body 10 (sliding the display portion-side body 30 along arrow Y2 and superposing the same on the operating portion-side body 10 in Fig. 1) without slidingly moving the same, as shown in Fig. 3. In this embodiment, the state of the portable telephone 100 shown in Fig. 3 is regarded as the initial state, and the position where the display portion-side body 30 is completely superposed on the operating portion-side body 10 is regarded as an initial position.

The portable telephone 100 is so formed that the user can slidingly move the display portion-side body 30 (display portion-side housing 33) with respect to the operating portion-side body 10 (operating portion-side housing 13) and locate the same on the second sliding movement position as shown in Fig. 4 by slidingly moving the display portion-side body 30 with respect to the operating portion-side body 10 along arrow X1 from the initial state shown in Fig. 3. The state where the display portion-side body 30 is located on the second sliding movement position is regarded as a second sliding state. The portable telephone 100 is formed to expose a second operating key region B when the same is in the second sliding state. The second sliding movement position is an example of the "sliding movement position" in the present invention, and the second operating key region B is an example of the "second operating key region" in the present invention.

As shown in Fig. 2, the operating portion-side body 10 and the display portion-side body 30 are connected with each other through a sliding plate 50 of sheet metal (metal) arranged therebetween.

The sliding mechanism is now described. As shown in Fig. 2, a pair of guide portions 11a are integrally formed on the lid member 11 of a metal constituting the operating portion-side body 10. The pair of guide portions 11a are formed to extend along the direction X. Further, the pair of guide portions 11a are formed to be capable of holding sliding members 51 of resin respectively.

As shown in Fig. 2, a pair of guide portions 32a are integrally formed on the casing member 32 constituting the display portion-side body 30. The pair of guide portions 32a are formed to extend along the direction Y. Further, the pair of guide portions 32a are formed to be capable of holding sliding members 52 of resin respectively.

As shown in Fig. 2, the sliding plate 50 is provided with a rectangular planar portion 50a and edge portions 50b and 50c integrally formed on edges of the planar portion 50a by folding the sheet metal. The edge portions 50b are provided in a pair to extend in the direction X along end portions of the planar portion 50a in the direction Y, while the edge portions 50c are provided in a pair to extend in the direction Y along end portions of the planar portion 50a in the direction X.

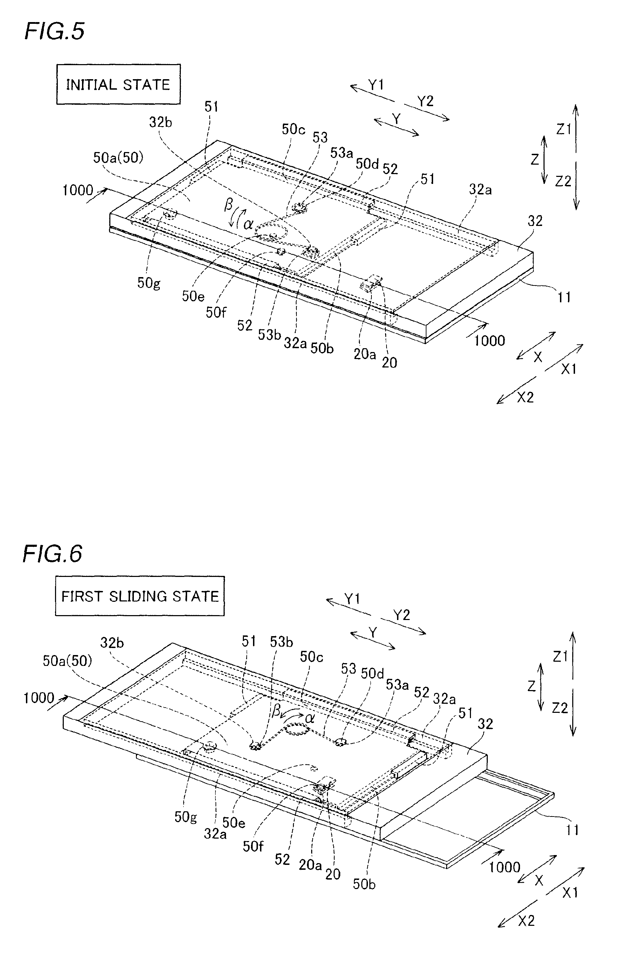

Therefore, the sliding plate 50 is formed to be slidingly moved with respect to the casing member 32 of the display portion-side body 30 in the direction Y through the sliding members 52 while the edge portions 50c are fitted along the sliding members 52 retained by the guide portions 32a, as shown in Fig. 5. Thus, the portable telephone 100 is formed to enter the first sliding state shown in Figs. 1 and 6 when the user slidingly moves the display portion-side body 30 from the initial state shown in Figs. 3 and 5 along arrow Y1 thereby locating the same on the first sliding movement position. On the other hand, the portable telephone 100 is formed to enter the initial state shown in Figs. 3 and 5 when the user slidingly moves the display portion-side body 30 from the first sliding state shown in Figs. 1 and 6 along arrow Y2 thereby locating the same on the initial position. The direction Y is an example of the "first direction" in the present invention.

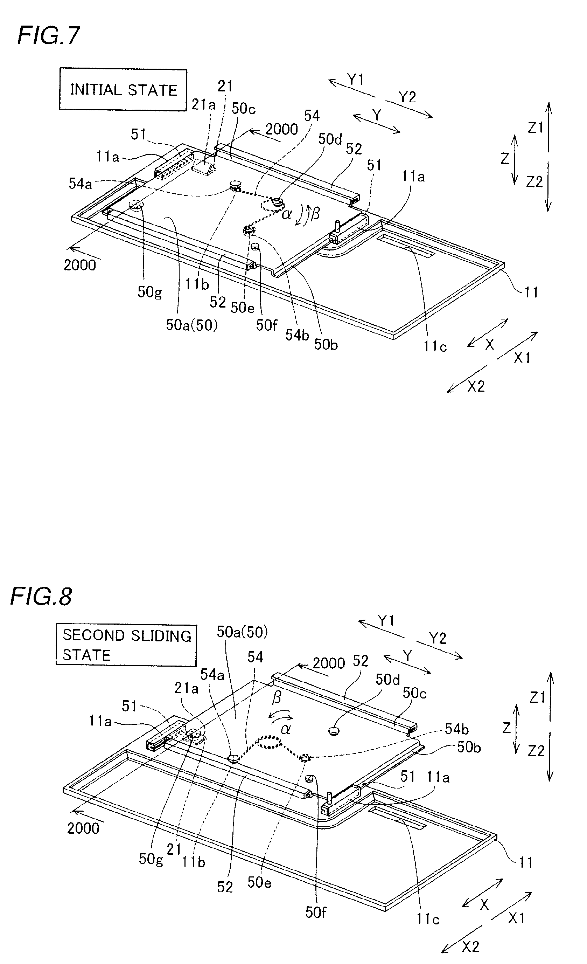

The sliding plate 50 is formed to be slidingly moved along the direction X, orthogonal to the direction Y, through the sliding members 51 while the edge portions 50b are fitted along the sliding members 51 retained by the guide portions 11a, as shown in Fig. 7. Thus, the portable telephone 100 is formed to enter the second sliding state shown in Fig. 8 when the user slidingly moves the sliding plate 50 along arrow X1 from the initial state shown in Fig. 7 thereby locating the same on the second sliding movement position. On the other hand, the portable telephone 100 is formed to enter the initial state shown in Fig. 7 when the user slidingly moves the sliding plate 50 along arrow X2 from the second sliding state shown in Fig. 8 thereby locating the same on the initial position. The direction X is an example of the "second direction" in the present invention.

The portable telephone 100 is so formed that the display portion-side body 30, having the guide portions 32a retaining the sliding plate 50, is also slidingly moved in the direction X following the sliding movement in the direction X. Thus, the portable telephone 100 is formed to enter the second sliding state shown in Fig. 4 when the user slidingly moves the display portion-side body 30 along arrow X1 from the initial state shown in Fig. 3. On the other hand, the portable telephone 100 is formed to enter the initial state shown in Fig. 3 when the user slidingly moves the display portion-side body 30 along arrow X2 from the second sliding state shown in Fig. 4 thereby locating the same on the initial position.

According to this embodiment, the portable telephone 100 so includes the aforementioned sliding mechanism that the user can use the same in the state sliding the display portion-side body 30 with respect to the operating portion-side body 10 in the direction X or the direction Y orthogonal to the direction X. In other words, the portable telephone 100 is so formed that the user can operate the same by using a plurality of operating keys 40, described later, corresponding to the first operating key region A, exposed on the upper surface (along arrow Z1) of the operating portion-side body 10, of the operating key portion 15 in the first sliding state as shown in Fig. 1, when slidingly moving the display portion-side body 30 along arrow Y1 from the initial state shown in Fig. 3. On the other hand, the portable telephone 100 is so formed that the user can operate the same by using a plurality of operating keys 40, corresponding to the second operating key region B exposed on the upper surface of the operating portion-side body 10, of the operating key portion 15 in the second sliding state as shown in Fig. 4, when slidingly moving the display portion-side body 30 along arrow X1 from the initial state shown in Fig. 3.

As shown in Fig. 2, a spring member 53 consisting of a torsion spring is pivotably mounted between the casing member 32 and the sliding plate 50. More specifically, a ringlike end portion 53a of the spring member 53 is pivotably engaged with a boss portion 32b (shown by broken lines) provided on the lower surface (along arrow Z2) of the casing member 32 to protrude along arrow Z2, and another ringlike end portion 53b of the spring member 53 is pivotably engaged with a boss portion 50d provided on the upper surface of the planar portion 50a of the sliding plate 50.

Thus, the portable telephone 100 is so formed that, when the display portion-side body 30 is completely superposed on the operating portion-side body 10 (in the initial state shown in Fig. 3), the spring member 53 is arranged on a position shown in Fig. 5, thereby regularly pressing the casing member 32 along arrow Y2 through the elastic force thereof. On the other hand, the portable telephone 100 is so formed that, when the user starts slidingly moving the display portion-side body 30 (see Figs. 1 and 3) with respect to the operating portion-side body 10 along arrow Y1, the boss portion 32b of the casing member 32 moves with respect to the boss portion 50d of the sliding plate 50 along arrow Y1, whereby the spring member 53 gradually pivots on the end portion 53a in a direction α. The spring member 53 is deformed to reduce the distance between the end portions 53a and 53b when starting pivoting in the direction α, and hence it follows that the user slidingly moves the display portion-side body 30 along arrow Y1 against the urging force of the spring member 53 along arrow Y2. Further, the portable telephone 100 is so formed that, when the spring member 53 pivots in the direction α in the aforementioned sliding operation, the urging force of the spring member 53 switches from the direction along arrow Y2 to the direction along arrow Y1 in an intermediate stage of the pivoting operation of the spring member 53. The portable telephone 100 is so formed that, when the display portion-side body 30 is completely slidingly moved along arrow Y1 (in the first sliding state shown in Fig. 1), the spring member 53 is arranged on a position shown in Fig. 6, thereby regularly pressing the casing member 32 along arrow Y1 through the elastic force thereof. The portable telephone 100 is so formed that, also when the user slides the display portion-side body 30 from the direction along arrow Y1 to the direction along arrow Y2, the direction of the urging force switches from the direction along arrow Y1 to the direction along arrow Y2 while the spring member 53 pivots in the direction (direction β) opposite to the above. Thus, the portable telephone 100 is formed to assist the sliding operation of the display portion-side body 30 (see Figs. 1 and 3) through the change of the urging direction following the pivoting operation of the spring member 53 when the user reciprocates the display portion-side body 30 in the direction Y. For the purpose of convenience, Figs. 5 and 6 show the sliding plate 50 in a state removing the operating key portion 15 exposed simultaneously with the sliding operation.

As shown in Fig. 2, further, a spring member 54 consisting of a torsion spring is pivotably mounted between the lid member 11 and the sliding plate 50. More specifically, a ringlike end portion 54a of the spring member 54 is pivotably engaged with a boss portion 11b provided on the lid member 11 to protrude along arrow Z1, and another ringlike end portion 54b of the spring member 54 is pivotably engaged with a boss portion 50e (shown by broken lines) provided on the lower surface of the planar portion 50a of the sliding plate 50.

Thus, the portable telephone 100 is so formed that, when the display portion-side body 30 is completely superposed on the operating portion-side body 10 (in the initial state shown in Fig. 3), the spring member 54 is arranged on a position shown in Fig. 7, thereby regularly pressing the casing member 32 along arrow X2 through the elastic force thereof. On the other hand, the portable telephone 100 is so formed that, when the user starts sliding the display portion-side body 30 (see Fig. 3) with respect to the operating portion-side body 10 along arrow X1, the boss portion 50e of the sliding plate 50 moves with respect to the boss portion 11b of the lid member 11 along arrow X1 as shown in Fig. 8, whereby the spring member 54 gradually pivots on the end portion 54a in a direction β. The spring member 54 is deformed to reduce the distance between the end portions 54a and 54b when starting pivoting in the direction β, and hence it follows that the user slidingly moves the display portion-side body 30 along arrow X1 against the urging force of the spring member 53 along arrow X2. Further, the portable telephone 100 is so formed that, when the spring member 54 pivots in the direction β in the aforementioned sliding operation, the urging force of the spring member 54 switches from the direction along arrow X2 to the direction along arrow X1 in an intermediate stage of the pivoting operation of the spring member 54. The portable telephone 100 is so formed that, when the display portion-side body 30 is completely slidingly moved along arrow X1 (in the second sliding state shown in Fig. 4), the spring member 54 is arranged on a position shown in Fig. 8, thereby regularly pressing the casing member 32 along arrow X1 through the elastic force thereof. The portable telephone 100 is so formed that, also when the user slides the display portion-side body 30 from the direction along arrow X1 to the direction along arrow X2, the direction of the urging force switches from the direction along arrow X1 to the direction along arrow X2 in an intermediate stage of the sliding operation while the spring member 54 rotates in the direction (direction α) opposite to the above. Thus, the portable telephone 100 is formed to assist the sliding operation of the display portion-side body 30 (see Figs. 3 and 4) through the change in the urging direction following the pivoting of the spring member 54 when the user reciprocates the display portion-side body 30 in the direction X. For the purpose of convenience, Figs. 7 and 8 show the sliding plate 50 in a state removing the casing member 32.

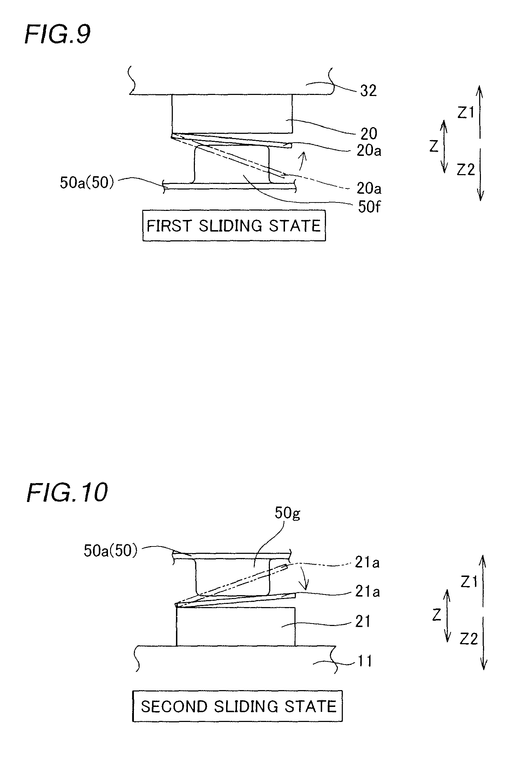

According to this embodiment, a protrusion 50f protruding upward (along arrow Z1) is formed on the planar portion 50a of the sliding plate 50 along arrows X2 and Y2, as shown in Figs. 2 and 5. The protrusion 50f is an example of the "first sensing element" in the present invention. A first position sensor 20 (shown by broken lines) consisting of a mechanical sensor mechanically detecting contact with the protrusion 50f is arranged on the lower surface (along arrow Z2) of the casing member 32, to correspond to the protrusion 50f. A protruding section 20a of the first position sensor 20 is formed to be pressed upward (along arrow Z1) by coming into contact with the protrusion 50f when the display portion-side body 30 is located on the first sliding movement position, as shown in Fig. 9. Thus, the portable telephone 100 is so formed that the first position sensor 20 detects that the display portion-side body 30 is located on the first sliding movement position. The first position sensor 20 is an example of the "first sensor" in the present invention.

According to this embodiment, a protrusion 50g (shown by broken lines) protruding downward (along arrow Z2) is formed on the planar portion 50a of the sliding plate 50 along arrows X2 and Y1, as shown in Figs. 2 and 7. The protrusion 50g is an example of the "second sensing element" in the present invention. A second position sensor 21 consisting of a mechanical sensor mechanically detecting contact with the protrusion 50g is arranged on the lid member 11, to correspond to the protrusion 50g. A protruding section 21a of the second position sensor 21 is formed to be pressed downward (along arrow Z2) by coming into contact with the protrusion 50g when the sliding plate 50 is located on the second sliding movement position, as shown in Fig. 10. Thus, the portable telephone 100 is so formed that the second position sensor 21 detects that the sliding plate 50 and the display portion-side body 30 are located on the second sliding movement position. The second position sensor 21 is an example of the "second sensor" in the present invention.

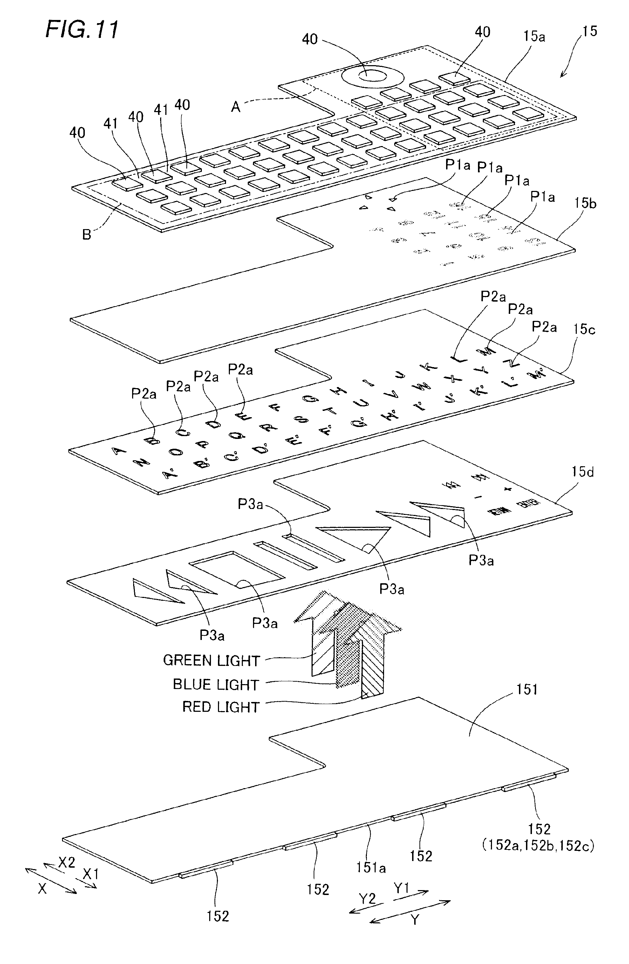

As shown in Fig. 11, the operating key portion 15 of the operating portion-side body 10 has an L shape including the partially overlapping first and second operating key regions A and B. The operating key portion 15 includes a sheet base 15a, a green reflecting sheet 15b, a blue reflecting sheet 15c and a red reflecting sheet 15d. The operating key portion 15 has a four-layer structure formed by stacking the green, blue and red reflecting sheets 15b, 15c and 15d on the sheet base 15a by vacuum evaporation. The sheet base 15, made of a resin material, is arranged on the surface (operating surface) of the operating key portion 15. A plurality of convex operating keys 40 are fixedly formed on the sheet base 15. The operating keys 40 are examples of the "key portions" in the present invention. More specifically, portions of the sheet base 15a corresponding to the operating keys 40 are formed as projecting portions, while the remaining portions, other than the operating keys 40, of the sheet base 15a are formed as recess portions 41. The operating key portion 15 is so formed that numerals, characters and symbols allocated to the respective operating keys 40 can be displayed on the operating keys 40 and the recess portions 41 respectively. The plurality of convex operating keys 40 and the recess portions 41 therebetween are integrally formed on the sheet base 15a.

The green reflecting sheet 15b has a function of selectively reflecting only green light and transmitting other light. In the green reflecting sheet 15b, a plurality of openings P1a for displaying display patterns P1 (see Fig. 1) consisting of numerals 1 to 16 are individually formed on positions corresponding to 16 rectangular operating keys 40 included in the first operating key region A. In the green reflecting sheet 15b, further, a plurality of openings P1a for displaying display patterns P1 of arrows in four directions (along arrows X1, X2, Y1 and Y2) are individually formed on positions corresponding to circular operating keys 40 included in the first operating key region A. Therefore, the portable telephone 100 is so formed that green light applied from under the operating key portion 15 passes through the openings P1a having shapes of the display patterns P1 and is reflected on portions of the green reflecting sheet 15b other than the openings P1a. Thus, the portable telephone 100 is so formed that the respective operating keys 40 (sheet base 15a) of the operating key portion 15 display the respective display patterns P1 (the numerals 1 to 16 and the arrows of the four directions) (see Fig. 1) in shiny green with the green light passing through the openings P1a of the green reflecting sheet 15b.

The blue reflecting sheet 15c has a function of selectively reflecting only blue light and transmitting other light. In the blue reflecting sheet 15c, a plurality of openings P2a for displaying display patterns P2 (see Fig. 4) of alphabetical characters (A to Z and A' to M') are individually formed on positions corresponding to 39 rectangular operating keys 40 included in the second operating key region B. Therefore, the portable telephone 100 is so formed that blue light applied from under the operating key portion 15 passes through the openings P2a having shapes of the display patterns P2 and is reflected on portions of the blue reflecting sheet 15c other than the openings P2a. Thus, the portable telephone 100 is so formed that the respective operating keys 40 (sheet base 15a) of the operating key portion 15 display the respective display patterns P2 (alphabetical characters (A to Z and A' to M')) (see Fig. 4) in shiny blue with the blue light passing through the openings P2a of the blue reflecting sheet 15c in a character input mode.

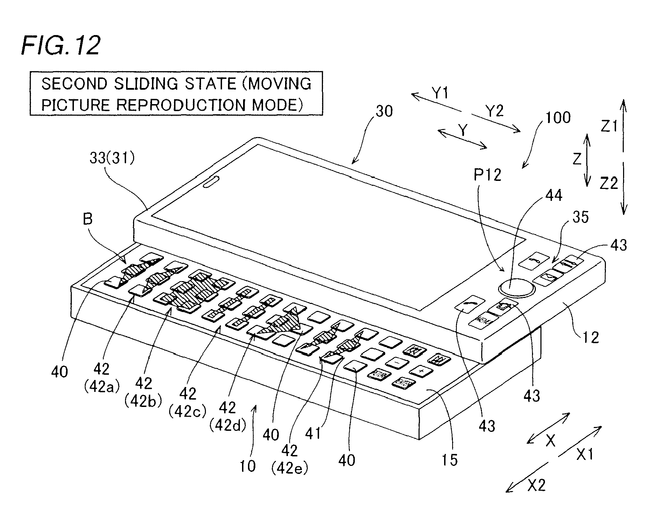

The red reflecting sheet 15d has a function of selectively reflecting only red light and transmitting other light. In the red reflecting sheet 15d, a plurality of openings P3a for displaying operating buttons 42 (operating button groups 42a to 42e) (see Fig. 12) employing the plurality of operating keys 40 and the recess portions 41 are formed on positions corresponding to respective operating buttons 42 of the second operating key region B. Therefore, the portable telephone 100 is so formed that red light applied from under the operating key portion 15 passes through the openings P3a having shapes of the operating buttons 42 and is reflected on portions of the red reflecting sheet 15d other than the openings P3a. Thus, the portable telephone 100 is so formed that the respective operating keys 40 (sheet base 15a) of the operating key portion 15 display the operating buttons 42 (button groups 42a to 42e) (see Fig. 12) in shiny red with the red light passing through the openings P3a of the red reflecting sheet 15d in a moving picture reproduction mode.

A light guide plate 151 is arranged under the operating key portion 15, while four light-emitting portions 152 emitting green illumination light, blue illumination light and red illumination light are provided on a side surface 151a of the light guide plate 151.

The light guide plate 151 has a function of uniformly applying the illumination light received from the side surface 151a to the overall surface. Thus, the light guide plate 151 is formed to apply the green illumination light, the blue illumination light and the red illumination light from the four light-emitting portions 152 to the overall operating key portion 15 from below.

Each light-emitting portion 152 includes three LEDs (light-emitting diodes), i.e., a green LED 152a, a blue LED 152b and a red LED 152c. The light-emitting portion 152 is formed to individually apply green light, blue light and red light to the light guide plate 151 with the respective ones of the green LED 152a, the blue LED 152b and the red LED 152c.

According to this embodiment, the potable telephone 100 is so formed that displays of the operating keys 40 can be switched between three display modes (a telephone call mode, the character input mode and the moving picture reproduction mode). In other words, the operating key portion 15 is formed to select any of the telephone call mode (see Fig. 1) displaying the green display patterns P1, the character input mode (see Fig. 4) displaying the blue display patterns P2 and the moving picture reproduction mode (see Fig. 4) displaying the red operating buttons 42 and to switchably display the same when one of the green illumination light, the blue illumination light and the red illumination light is applied thereto from below. The operating keys 40 are formed to accept operation input corresponding to the numerals, the characters or the symbols displayed on the operating keys 40 in each display mode.

More specifically, the operating keys 40 are so formed that the display patterns P1 having single significances (the respective ones of the numerals 1 to 16 and the arrows of the four directions) with single operating keys 40 are displayed on the respective operating keys 40 in the telephone call mode, as shown in Fig. 1. The portable telephone 100 is formed to display the display patterns P1 when the user slides the same in the vertical direction (direction Y1) in the telephone call mode.

The portable telephone 100 is so formed that the respective operating keys 40 display the display patterns P2 having single significances (the respective ones of the alphabetical characters (A to Z and A' to M')) with single operating keys 40 in the character input mode, as shown in Fig. 4. The portable telephone 100 is formed to display the display patterns P2 when the user slides the same in the horizontal direction (along arrow X1) in the character input mode.

The moving picture reproduction mode is a display mode of displaying the operating buttons 42 used for a moving picture reproducing function with the plurality of operating keys 40 in a large-sized manner to correspond to an operation for reproducing the moving pictures in a case of executing the moving picture reproducing function (a case where the display portion 34 displays moving pictures) with the portable telephone 100. The portable telephone 100 is formed to display the operating buttons 42 having single significances with the plurality of operating keys 40 in a large-sized manner in the moving picture reproduction mode. More specifically, the operating key portion 15 displays display patterns of a rewind button group 42a, a stop button group 42b, a temporary stop button group 42c and a fast forward button group 42e each with six operating keys 40 in a large-sized manner, and displays a display pattern of a reproducing button group 42d with four operating keys 40 in a large-sized manner, as shown in Fig. 12. The operating keys 40 provided on the side of the five types of operating button groups 42a, 42b, 42c, 42d and 42e along arrow Y1 individually display operating buttons such as "next chapter" and "previous chapter".

According to this embodiment, the portable telephone 100 is formed to display the operating buttons 42 by also employing the recess portions 41 between the plurality of operating keys 40 in addition to the plurality of operating keys 40 in the aforementioned moving picture reproduction mode. Therefore display patterns of designs (a rectangular design denoting "stop", a triangular design denoting "reproduction" etc.) denoting single significances respectively with the plurality of operating keys 40 and the recess portions 41 between the operating keys 40 are continuously displayed on the operating buttons 42. Each operating button group 42 is so formed that an operation instruction is valid when at least one of the plurality of operating keys 40 (included in the operating button group 42) is pressed down. For example, the stop button group 42b is so formed that a stop instruction for reproduction of the moving pictures is valid when at least one of the six operating keys 40 included in a display region of the stop button group 42b is pressed down during the reproduction of the moving pictures.

As shown in Fig. 2, the switching board 16 is arranged under the operating key portion 15 having the four-layer structure and the lower surface of the light guide plate 151 (see Fig. 11). The switching board 16 consists of the FPC board provided with a key entry circuit employing a membrane system. In the switching board 16, switch portions 16a are arranged on positions corresponding to the operating keys 40 of the operating key portion 15 respectively. The portable telephone 100 is formed to detect an input operation of the user pressing down the operating keys 40 with the switch portions 16a of the switching board 16. The switching board 16 is fixedly mounted on the upper surface of the lid member 11, while a lead portion (not shown) is connected to the operating circuit board 14 through a hole portion 11c provided on the lid member 11.

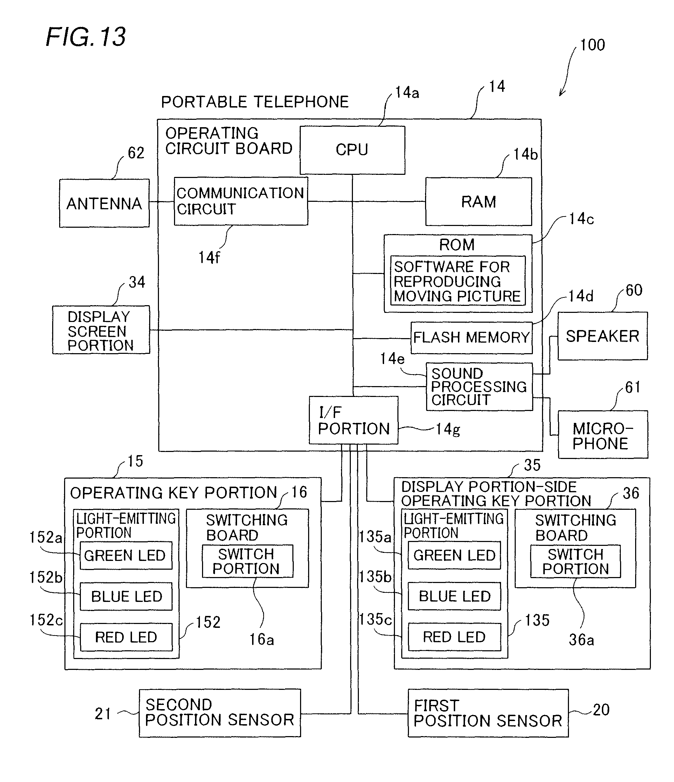

As shown in Fig. 2, the display portion-side operating key portion 35 includes a sheet base, a green reflecting sheet, a blue reflecting sheet and a red reflecting sheet similarly to the operating key portion 15 shown in Fig. 11, while a light guide plate and a light-emitting portion 135 (see Fig. 13) having a red LED 135a (see Fig. 13), a blue LED 135b (see Fig. 13) and a red LED 135c (see Fig. 13) are arranged under the display portion-side operating key portion 35. A plurality of convex operating keys 43 and a spherical operating portion 44 reacting to upward, downward, rightward and leftward operations by the user are fixedly formed on the display portion-side operating key portion 35.

The display portion-side operating key portion 35 is formed to be capable of displaying patterns allocated to the respective operating keys 43 on the respective operating keys 43. More specifically, a plurality of openings (not shown) for displaying display patterns P11 (a pattern indicating a telephone call, a pattern indicating an end of the telephone call, a pattern for opening a menu, a pattern for returning a basic display, a pattern for searching for a telephone number and a pattern for returning to a previously opened screen) (see Fig. 1) are individually formed on positions corresponding to the operating keys 43 in the green reflecting sheet. The display portion-side operating key portion 35 is formed to display these display patterns P11 on the display portion-side operating key portion 35 to correspond to the display patterns P1 consisting of the numerals 1 to 16 and the display patterns P1 (see Figs. 1 and 3) of the arrows of the four directions (along arrows X1, X2, Y1 and Y2) displayed on the operating key portion 15 in the telephone call mode.

In each of the blue and red reflecting sheets, a plurality of openings (not shown) for displaying display patterns P12 (a pattern indicating the telephone call, a pattern indicating the end of the telephone call, a pattern for opening the menu, a pattern for returning to the basic display mode, a pattern for opening a menu related to an e-mail and a pattern for moving a character input cursor (not shown)) are individually formed on positions corresponding to the operating keys 43. These patterns P12 are formed to correspond to the display patterns P2 (see Fig. 4) of the alphabetic characters (A to Z and A' to M') and the operating buttons 42 (see Fig. 12) displayed on the operating key portion 15 in the character input mode and the moving picture reproduction mode.

Thus, the portable telephone 100 is so formed that the respective operating keys 43 of the display portion-side operating key portion 35 display the display patterns P11 (see Fig. 1) in shiny green in the telephone call mode. Further, the portable telephone 100 is so formed that the respective operating keys 43 of the display portion-side operating key portion 35 display the display patterns P12 (see Figs. 4 and 12) in shiny blue or red in the character input mode or the moving picture reproduction mode.

The switching board 36 consists of the FPC board provided with a key entry circuit employing a membrane system. In the switching board 36, switch portions 36a are arranged on positions corresponding to the operating keys 43 of the display portion-side operating key portion 35 respectively. The portable telephone 100 is formed to detect an operation of the user pressing down the operating keys 43 with the switch portions 36a of the switching board 36.

As shown in Fig. 13, the operating circuit board 14 of the portable telephone 100 includes a CPU (central processing unit) 14a, a RAM (random access memory) 14b, a ROM (read only memory) 14c, a flash memory 14d as a nonvolatile memory, a sound processing circuit 14e, a communication circuit 14f and an I/F (interface) portion 14g. The CPU 14a is an example of the "control portion" in the present invention.

The CPU 14a is formed to control the overall portable telephone 100 by performing various arithmetic operations while employing the RAM 14b as a working area. Further, the CPU 14a is formed to switch the green LED 152a, the blue LED 152b or the red LED 152c of the operating key portion 15 for emitting light. The CPU 14a is also formed to switch the green LED 135a, the blue LED 135b or the red LED 135c of the display portion-side operating key portion 35 for emitting light.

The CPU 14a is connected with the first position sensor 20 through the I/F portion 14g, and formed to recognize that the display portion-side body 30 is located on the first sliding movement position by detecting a signal from the first position sensor 20. The CPU 14a is also connected with the second position sensor 21 through the I/F portion 14g, and formed to recognize that the sliding plate 50 and the display portion-side body 30 are located on the second sliding movement position by detecting a signal from the second position sensor 21. Further, the CPU 14a is connected with the switching boards 16 and 36 through the I/F portion 14g respectively.

The RAM 14b has a function of rewritably storing temporary data or the like generated following the control by the CPU 14a. The ROM 14c stores programs, including software for reproducing moving pictures, for implementing various functions of the CPU 14a and respective control programs related to the telephone call mode, the character input mode and the moving picture reproduction mode of the portable telephone 100. The CPU 14a is formed to be capable of switching the mode by selecting any of the telephone call mode, the character input mode and the moving picture reproduction mode and thereby switching the display patterns P1 or P2 or the operating buttons 42 displayed on the operating keys 40 of the operating key portion 15 and the display patterns P11 or P12 displayed on the operating keys 43 of the display portion-side operating key portion 35. The flash memory 14d stores moving picture data. The software for reproducing moving pictures is an example of the "software" in the present invention.

According to this embodiment, the user makes a telephone call to another portable telephone (not shown) or the like with the portable telephone 100 in the telephone call mode. The portable telephone 100 is so formed that the CPU 14a switches the same to the telephone call mode in the first sliding state shown in Fig. 1 when the first position sensor 20 detects that the display portion-side body 30 is located on the first sliding movement position. The portable telephone 100 is so formed that the operating keys 40 of the operating key portion 15 display the display patterns P1 in green while the operating keys 43 of the display portion-side operating key portion 35 display the display patterns P11 in green following the switching to the telephone call mode. In the telephone call mode, the CPU 14a controls a speaker 60 outputting sounds and a microphone 61 accepting sound input from the user with the sound processing circuit 14e, as shown in Fig. 13. Further, the CPU 14a is formed to control a signal for making communication with a base station (not shown) through an antenna 62 with the communication circuit 14f.

According to this embodiment, the user inputs characters with the portable telephone 100 in the character input mode. The portable telephone 100 is so formed that the CPU 14a switches the same to the character input mode in the second sliding state shown in Fig. 4 when the second position sensor 21 detects that the display portion-side body 30 is located on the second sliding movement position. The portable telephone 100 is so formed that the operating keys 40 of the operating key portion 15 display the display patterns P2 in blue while the operating keys 43 of the display portion-side operating key portion 35 display the display patterns P12 in blue following the switching to the character input mode. The portable telephone 100 is so formed that, when the same is switched to the character input mode, the display patterns P2 are automatically displayed on the positions of the corresponding operating keys 40 in blue, whether the user starts prescribed software (application) for inputting characters or not.

In the moving picture reproduction mode, the user performs an operation related to reproduction of moving pictures while starting the software for reproducing moving pictures. The portable telephone 100 is so formed that the CPU 14a switches the same to the moving picture reproduction mode shown in Fig. 12 when the user starts the software for reproducing moving pictures by performing a prescribed menu selection operation in the second sliding state shown in Fig. 4. Further, the portable telephone 100 is so formed that the CPU 14a switches the same to the moving picture reproduction mode shown in Fig. 12 simultaneously with starting of the software for reproducing moving pictures when the display portion-side body 30 is continuously moved from the initial state shown in Fig. 3 to the second sliding movement position within a prescribed time. The portable telephone 100 is so formed that the operating keys 40 of the operating key portion 15 display the operating buttons 42 in red while the operating keys 43 of the display portion-side operating key portion 35 display the display patterns P12 in red following the switching to the moving picture reproduction mode.

As shown in Fig. 13, the CPU 14a is formed to load the software for reproducing moving pictures from the ROM 14c, read moving picture data stored in the flash memory 14d and control the display screen portion 34 and the sound processing circuit 14e when the moving picture reproduction mode is selected, so that the user can reproduce the moving pictures.

A control flow in a mode switching operation of the portable telephone 100 according to the embodiment of the present invention is now described with reference to Figs. 1, 3, 4 and 11 to 14.

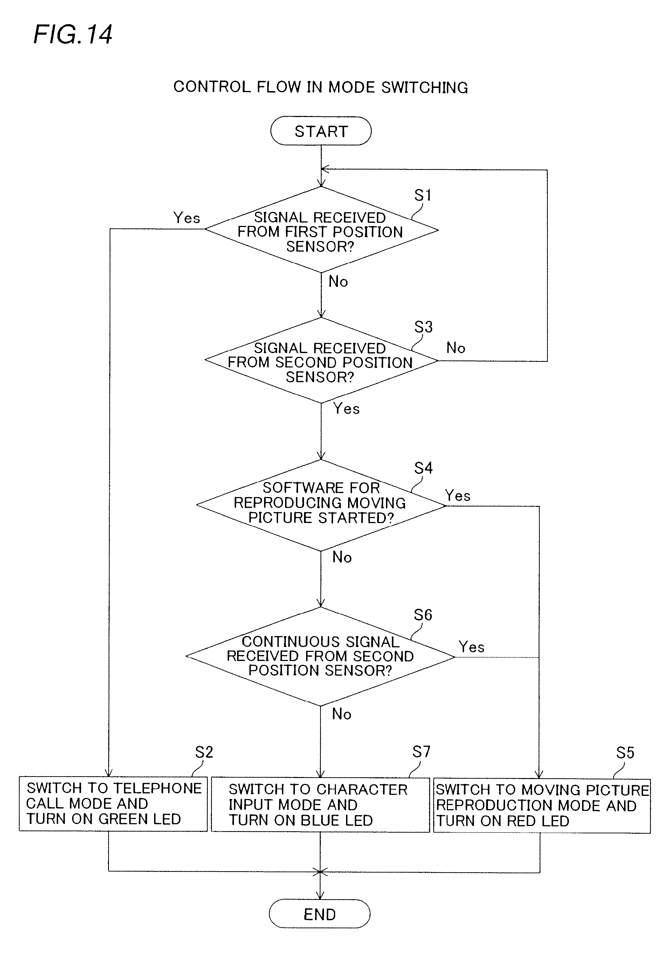

First, the CPU 14a (see Fig. 13) determines whether or not the signal from the first position sensor 20 (see Fig. 13) indicating that the display portion-side body 30 (see Fig. 1) has been moved to the first sliding movement position (see Fig. 1) is detected at a step S1, as shown in Fig. 14. When determining that the signal from the first position sensor 20 is detected at the step S1, the CPU 14a advances to a step S2, and switches the portable telephone 100 to the telephone call mode. Then, the CPU 14a turns on the green LEDs 152a and 135a (see Fig. 13) of the operating key portion 15 and the display portion-side operating key portion 35 (see Fig. 1). Thus, the first operating key region A of the operating key portion 15 displays the respective display patterns P1 (the numerals 1 to 16 and the arrows in the four directions) in shiny green and the respective operating keys 43 of the display portion-side operating key portion 35 display the display patterns P11 in shiny green, as shown in Fig. 1. Then, the CPU 14a terminates the control for switching the mode of the portable telephone 100. When determining that the signal from the first position sensor 20 is not detected, on the other hand, the CPU 14a advances to a step S3. At the step S3, the CPU 14a determines whether or not the signal from the second position sensor 21 (see Fig. 13) indicating that the display portion-side body 30 has been moved to the second sliding movement position (see Fig. 4) is detected. When determining that the signal from the second position sensor 21 is not detected at the step S3, the CPU 14a returns to the step S1. When determining that the signal from the second position sensor 21 is detected at the step S3, on the other hand, the CPU 14a advances to a step S4.

At the step S4, the CPU 14a determines whether or not the user has started the software (see Fig. 13) for reproducing moving pictures by performing the prescribed menu selection operation. When determining that the user has started the software for reproducing moving pictures at the step S4, the CPU 14a advances to a step S5 and switches the portable telephone 100 to the moving picture reproduction mode. Then, the CPU 14a turns on the red LEDs 152c and 135c (see Fig. 13) of the operating key portion 15 and the display portion-side operating key portion 35. Thus, the second operating key region B of the operating key portion 15 displays the operation buttons 42 in shiny red and the respective operating keys 43 of the display portion-side operating key portion 35 display the display patterns P12 in shiny red, as shown in Fig. 12. Then, the CPU 14a terminates the control for switching the mode of the portable telephone 100. When determining that the user has not started the software for reproducing moving pictures at the step S4, on the other hand, the CPU 14a advances to a step S6.

At the step S6, the CPU 14a determines whether or not the display portion-side body 30 has been so continuously moved from the initial state (see Fig. 3) to the second sliding movement position (see Fig. 4) within the prescribed time that the second position sensor 21 has continuously output a signal. When determining that a continuous signal from the second position sensor 21 has been detected at the step S6, the CPU 14a advances to the step S5, so that the operating key portion 15 and the display portion-side operating key portion 35 perform the aforementioned displays in the moving picture reproduction mode. Then, the CPU 14a terminates the control of switching the mode of the portable telephone 100. When determining that no continuous signal from the second position sensor 21 has been detected at the step S6, on the other hand, the CPU 14a advances to a step S7, and switches the portable telephone 100 to the character input mode. Then, the CPU 14a turns on the blue LEDs 152b and 135b (see Fig. 13) of the operating key portion 15 and the display portion-side operating key portion 35. Thus, the second operating key region B of the operating key portion 15 displays the display patterns P2 (the alphabetic characters (A to Z and A' to M')) in shiny blue and the respective operating keys 43 of the display portion-side operating key portion 35 display the display patterns P12 in shiny blue, as shown in Fig. 4. Then, the CPU 14a terminates the control for switching the mode of the portable telephone 100.

According to this embodiment, as hereinabove described, the portable telephone 100 is so formed that the CPU 14a switches the same to the telephone call mode and switches the operating keys 40 of the operating key portion 15 to display the display patterns P1 when the user locates the display portion-side body 30 (display portion-side housing 33) on the first sliding movement position and switches the same to the character input mode and switches the operating keys 40 of the operating key portion 15 to display the display patterns P2 when the user locates the display portion-side body 30 on the second sliding movement position, whereby the user can switch the display patterns displayed on the operating key portion 15 by simply slidingly moving the display portion-side housing 33 when using the portable telephone 100 without starting the prescribed software (application) for inputting characters. Thus, the sliding portable telephone 100 can prevent the user from complicated operations when he/she switches the display patterns displayed on the operating key portion 15. Further, the display patterns on the operating key portion 15 can be switched in response to the first and second sliding movement positions, whereby the portable telephone 100 can display the display patterns suitable to the user's operation on the operating key portion 15.

According to this embodiment, as hereinabove described, the portable telephone 100 is so formed that the CPU 14a controls the operating key portion 15 to display the display patterns P1 on the operating keys 40 while controlling the display portion-side operating key portion 35 to display the display patterns P11 on the operating keys 43 when the first position sensor 20 detects that the display portion-side body 30 is located on the first sliding movement position and so formed that the CPU 14a controls the operating key portion 15 to display the display patterns P2 on the operating keys 40 while controlling the display portion-side operating key portion 35 to display the display patterns P12 on the operating keys 43 when the second position sensor 21 detects that the display portion-side body 30 is located on the second sliding movement position. Thus, the portable telephone 100 can easily display the display patterns suitable to the user's operation on the operating key portion 15 or the display portion-side operating key portion 35 in response to the first or second sliding movement position of the display portion-side housing 33 detected by the first or second position sensor 20 or 21.

According to this embodiment, as hereinabove described, the portable telephone 100 switches the display patterns on the operating key portion 15 when the position of protrusion 50f detected by the first position sensor 20 corresponds to the first sliding movement position or the position of the protrusion 50g detected by the second position sensor 21 corresponds to the second sliding movement position, whereby the portable telephone 100 can easily display the display patterns suitable to the user's operation on the operating key portion 15 in response to each of the first and second sliding movement positions of the display portion-side housing 33 through the position of the protrusion 50f or 50g.

According to this embodiment, as hereinabove described, the state where the display portion-side housing 33 is not slidingly moved with respect to the operating portion-side housing 13 but superposed on the operating portion-side housing 13 in plan view is regarded as the initial position, whereby the CPU 14a is formed to switch the display patterns of the operating key portion 15 in response to the position of the display portion-side housing 33 slidingly moved with respect to the operating portion-side housing 13 from the initial position. According to this structure, the user cannot visually recognize the displays on the operating key portion 15 when the display portion-side housing 33 is arranged on the initial position with respect to the operating portion-side housing 13, whereby he/she can easily recognize that the display portion-side housing 33 is located on the initial position with respect to the operating portion-side housing 13.

According to this embodiment, as hereinabove described, the portable telephone 100 is so formed that the CPU 14a controls the operating key portion 15 to display the operating buttons 42 corresponding to the operation for reproducing moving pictures when the user performs the prescribed menu selection operation thereby starting the software for reproducing moving pictures and when the display portion-side body 30 is continuously moved from the initial position to the second sliding movement position. Also when the user switches the started software to the software for reproducing moving pictures on the second sliding movement position, therefore, the portable telephone 100 can display the operating buttons 42 suitable for operating the switched software for reproducing moving pictures on the operating key portion 15.

According to this embodiment, as hereinabove described, the CPU 14a switches the display patterns of the operating key portion 15 to any of the telephone call mode, the character input mode and the moving picture reproduction mode on the first or second sliding movement position, whereby the user can switch the portable telephone 100 to any of the telephone call mode, the character input mode and the moving picture reproduction mode by simply slidingly moving either the display portion-side housing 33 or the operating portion-side housing 13 with respect to either the operating portion-side housing 13 or the display portion-side housing 33 when using the portable telephone 100.

According to this embodiment, as hereinabove described, the operating key portion 15 displays the display patterns corresponding to the operation of the telephone call when the portable telephone 100 is in the telephone call mode on the first sliding movement position, whereby the operating key portion 15 can display the display patterns corresponding to the operation contents of the telephone call mode also when the user switches the portable telephone 100 to the telephone call mode on the first sliding movement position.

According to this embodiment, as hereinabove described, the portable telephone 100 can display the display patterns corresponding to the operation contents of the character input mode also when the same is switched to the character input mode on the second sliding movement position, by bringing the display patterns of the operating key portion 15 into those corresponding to the character input operation when the portable telephone 100 is in the character input mode on the second sliding movement position.

According to this embodiment, as hereinabove described, the portable telephone 100 can display a wide key region having single significances and including a plurality of operating keys by displaying the operating buttons 42 having the single significances with the plurality of operating keys 40 on the operating key portion 15 when the user starts the software for reproducing moving pictures on the second sliding movement position, whereby the visibility of the operating keys 40 (key region) can be improved.

According to this embodiment, as hereinabove described, the potable telephone 100 displays the operating buttons 42 having the single significances by employing not only the plurality of operating keys 40 but also the portions, other than the operating keys 40, between the plurality of operating keys 40, whereby the same can continuously display signs etc. allocated to the single operating keys 40 by employing the plurality of operating keys 40 and the portions, other than the operating keys 40, between the plurality of operating keys 40 also when displaying the operating buttons 42. Thus, the visibility of the display region including the plurality of operating keys 40 can be further improved.

According to this embodiment, as hereinabove described, the portable telephone 100 displays the operating buttons 42 having the single significances by employing not only the convex operating keys 40 but also the convex portions between the operating keys 40 when the user starts the software for reproducing moving pictures on the second sliding movement position so that the same can display a wide key region including not only the plurality of operating keys 40 but also the concave portions, whereby the visibility of the operating keys 40 (key region) can be further improved.

According to this embodiment, as hereinabove described, the CPU 14a selects one of the green, blue and red LEDs 152a, 152b and 152c of the light-emitting portion 152 for emitting light, thereby displaying the display patterns (the display patterns P1 or P2 or the operating buttons 42) displayed on the operating key portion 15 in a different color (green, blue or red). Thus, the user can easily recognize which display patterns the operating key portion 15 displays from among the plurality of display patterns corresponding to the first and second sliding movement positions.

According to this embodiment, as hereinabove described, the portable telephone 100 is formed to expose the first operating key region A of the operating key portion 15 for displaying the display patterns P1 positioned on the first operating key region A of the operating key portion 15 when the same is in the first sliding state and to expose the second operating key region B of the operating key portion 15 for displaying the display patterns P2 or the operating buttons 42 positioned on the second operating key region B of the operating key portion 15 42 when the same is in the second sliding state, whereby the portable telephone 100 can display the display patterns (the display patterns P1 or P2 or the operating buttons 42) suitable to the user's operation in response to the first operating key region A or the second operating key region B exposed when the display portion-side body 30 (display portion-side housing 33) is located on the first sliding movement position or the second sliding movement position).

According to this embodiment, as hereinabove described, the portable telephone 100 is so formed that the display patterns P11 displayed on the display portion-side operating key portion 35 correspond to the display patterns P1 positioned on the first operating key region A of the operating key portion 15 while the display patterns P12 displayed on the display portion-side operating key portion 35 correspond to the display patterns P2 positioned on the second operating key region B of the operating key portion 15, whereby the display portion-side operating key portion 35 stored in the display portion-side housing 33 can display the display patterns (P11 or P12) corresponding to the display patterns (P1 or P2) displayed on the operating key portion 15.

Although the present invention has been described and illustrated in detail, it is clearly understood that the same is by way of illustration and example only and is not to be taken by way of limitation, the spirit and scope of the present invention being limited only by the terms of the appended claims.

For example, while the aforementioned embodiment is applied to the portable telephone 100 as an exemplary portable terminal, the present invention is not restricted to this. The present invention is also applicable to a slidingly movable PDA or a portable game machine, so far as the same is a slidingly movable portable terminal.

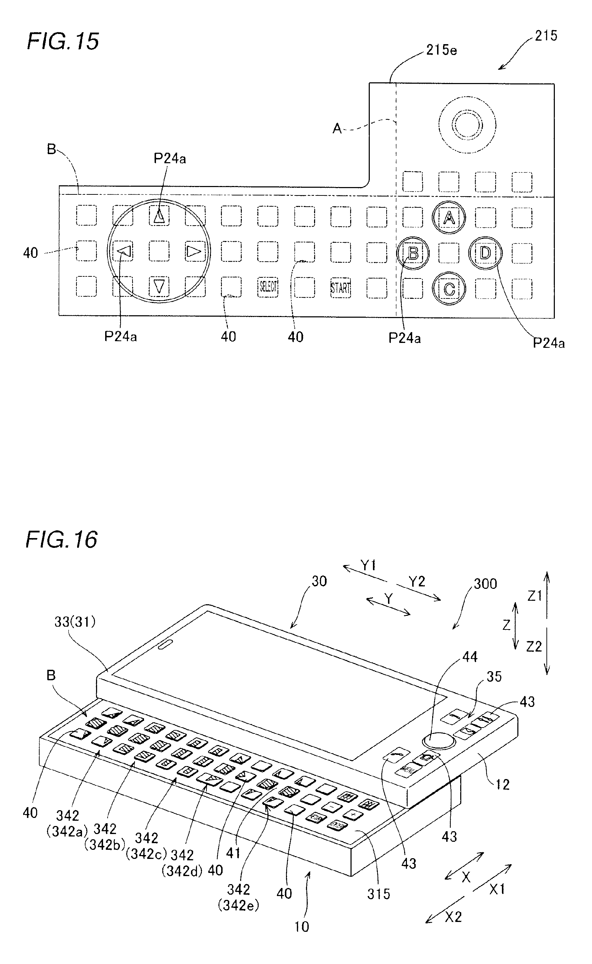

While the portable telephone 100 is so formed that the same is switchable between the telephone call mode, the character input mode and the moving picture reproduction mode and the operating key portion 15 and the display portion-side operating key portion 35 display the display patterns corresponding to the respective modes in the aforementioned embodiment, the present invention is not restricted to this. For example, the portable telephone may alternatively be further provided with a game mode, and display patterns corresponding to the game mode may be displayed on the operating key portion and the display portion-side operating key portion. More specifically, an operating key portion 215 further has an orange reflecting sheet 215e and a light-emitting portion (not shown) further has an orange LED in a first modification of the embodiment shown in Fig. 15. The orange reflecting sheet 215e has a function of selectively reflecting only orange light and transmitting other light. In the orange reflecting sheet 215e, a plurality of openings P24a for displaying display patterns P24 of arrows in four directions (along arrows X1, X2, Y1 and Y2) and encircled alphabetic display patterns P24 (A to D) are individually formed on positions corresponding to operating keys 40 of a second operating key region B. Therefore, this modification is so formed that orange light applied from under the operating key portion 215 passes through the openings P24a having shapes of the display patterns P24, and is reflected on portions of the orange reflecting sheet 215e other than the openings P24a. Thus, the respective operating keys 40 of the operating key portion 215 can display the respective display patterns P24 (the arrows and the encircled alphabetic display patterns (A to D))) in shiny orange with the orange light passing through the openings P24a of the orange reflecting sheet 215e. The number of the switchable modes is not restricted to three or four.

While the portable telephone 100 is formed to switch the display patterns displayed on the operating key portion 15 and the display portion-side operating key portion 35 when the user starts the software for reproducing moving pictures in the second sliding state in the aforementioned embodiment, the present invention is not restricted to this. For example, the portable telephone may alternatively be formed to switch the display patterns displayed on the operating key portion and the display portion-side operating key portion when the user starts software for reproducing music, for example.

While the portable telephone 100 is formed to display the operating buttons 42 having the single significances with the plurality of operating keys 40 in a large-sized manner in the aforementioned embodiment, the present invention is not restricted to this. For example, a portable telephone 300 may be formed to display operating buttons only with convex operating keys 40, as in a second modification of the embodiment shown in Fig. 16. According to the second embodiment, the portable telephone 300 displays respective operating buttons 342 (342a to 342e) only with key tops (upper surfaces of operating keys 40) of a plurality of operating keys 40. The operating buttons 342 include a rewind button group 342a, a stop button group 342b, a temporary stop button group 342c, a reproduction button group 342d and a fast forward button group 342e, similarly to the aforementioned embodiment.

While the portable telephone 100 is so formed that the user can locate the display portion-side body 30 (display portion-side housing 33) on the first and second sliding movement positions by slidingly moving the same with respect to the operating portion-side body 10 (operating portion-side housing 13) in the directions X and Y respectively in the aforementioned embodiment, the present invention is not restricted to this. For example, the portable telephone 100 may alternatively be formed to regularly partially expose the operating key portion of the operating portion-side housing and to locate the display portion-side housing on a sliding movement position by moving the same in a certain direction from the initial state. Thus, the portable telephone can be formed to switchably display the display patterns of the operating key portion in the initial state and those on the sliding movement position.

While the portable telephone 100 is so formed that the display portion-side body 30 is slidingly movable with respect to the operating portion-side body 10 in the direction X and the direction Y orthogonal to the direction X in the aforementioned embodiment, the present invention is not restricted to this. For example, the portable telephone 100 may alternatively be so formed that the display portion-side body 30 is slidingly movable with respect to the operating portion-side body 10 in directions other than the directions X and Y, so far as the "first direction" and the "second direction" in the present invention intersect with each other.

While the first and second position sensors 20 and 21 consist of the mechanical sensors respectively in the aforementioned embodiment, the present invention is not restricted to this. For example, magnets may alternatively arranged in place of the protrusions, and magnetic sensors detecting magnetism from the magnets may be employed as the first and second position sensors. Further alternatively, reflecting plates may be arranged in place of the protrusions, and reflecting optical sensors emitting light and detecting the light reflected by the reflecting plates may be employed as the first and second position sensors.

While the light-emitting portions 152 and 135 constituted of the LEDs are employed for displaying different display patterns on the operating key portion 15 and the display portion-side operating key portion 35 in different colors in the aforementioned embodiment, the present invention is not restricted to this. According to the present invention, the portable telephone may alternatively be formed to display different display patterns on the operating key portion and the display portion-side operating key portion in the same color.

While the portable telephone 100 is formed to be capable of switching the display patterns P11 in shiny green and the display patterns P12 in shiny blue or red on the display portion-side operating portion 35 in the aforementioned embodiment, the present invention is not restricted to this. According to the present invention, the portable telephone may not switch the display patterns on the display portion-side operating key portion.

## Claims

1. A portable terminal (100, 300) comprising:
an operating portion-side housing (13) provided with a first operating key (15, 215, 315) capable of switchably displaying a plurality of display patterns;
a display portion-side housing (33), provided to be relatively slidingly movable with respect to said operating portion-side housing, including a display portion (34); and
a control portion (14a) switching said display patterns of said first operating key in response to a sliding movement position of said display portion-side housing with respect to said operating portion-side housing.

2. The portable terminal according to claim 1,
wherein
said display portion-side housing is formed to be relatively slidingly movable with respect to said operating portion-side housing in a first direction and a second direction orthogonal to said first direction,
the portable terminal further comprises:
a first sensor (20) sensing that said display portion-side housing is slidingly moved in said first direction and located on a first sliding movement position, and
a second sensor (21) sensing that said display portion-side housing is slidingly moved in said second direction and located on a second sliding movement position, and
said control portion is formed to switch said display patterns of said first operating key on the basis of results of detection of said first sensor and said second sensor.

3. The portable terminal according to claim 2, further comprising a first sensing element (50f) for detecting the position of said display portion-side housing in said first direction with said first sensor and a second sensing element (50g) for detecting the position of said display portion-side housing in said second direction with said second sensor, wherein
said control portion is formed to switch said display patterns of said first operating key in a case where the position of said first sensing element with said first sensor is said first sliding movement position or the position of said second sensing element with said second sensor is said second sliding movement position.

4. The portable terminal according to claim 1, so formed that a state where said display portion-side housing is not slidingly moved with respect to said operating portion-side housing but superposed on said operating portion-side housing in plan view corresponds to an initial position, wherein
said control portion is formed to switch said display patterns of said first operating key in response to a sliding movement position of said display portion-side housing with respect to said operating portion-side housing from said initial position.

5. The portable terminal according to claim 1,
wherein
said control portion is formed to switch said display patterns of said first operating key in response to software started in said display portion of said display portion-side housing on said first sliding movement position or said second sliding movement position.

6. The portable terminal according to claim 1,
wherein
said control portion is formed to switch said display patterns of said first operating key to a display pattern indicating any of a telephone call mode, a character input mode and a moving picture reproduction mode on said first sliding movement position or said second sliding movement position.

7. The portable terminal according to claim 6,
wherein
said control portion is formed to control said display patterns of said first operating key to be a display pattern corresponding to a telephone call operation on said first sliding movement position when said portable terminal is in said telephone call mode.

8. The portable terminal according to claim 6,
wherein
said control portion is formed to control said display patterns of said first operating key to be a display pattern corresponding to a character input operation on said second sliding movement position when said portable terminal is in said character input mode.

9. The portable terminal according to claim 6,
wherein
said control portion is formed to control said display patterns of said first operating key to be a display pattern corresponding to an operation for reproducing moving pictures on said second sliding movement position when software for reproducing said moving pictures is started.

10. The portable terminal according to claim 9,
wherein
said first operating key includes a plurality of key portions (40), and
said control portion is formed to display operating buttons (42) having single significances on said first operating key with said plurality of key portions on said second sliding movement position when said software for reproducing said moving pictures is started.

11. The portable terminal according to claim 10,
wherein
said control portion is formed to display said operating buttons having said single significances not only with said plurality of key portions but also with portions, other than said key portions, between said plurality of key portions.

12. The portable terminal according to claim 10,
wherein
the respective ones of said key portions are convexly formed,
portions between said key portions are concavely formed, and
said control portion is formed to display said operating buttons having said single significances not only with said convex key portions but also with said concave portions between said key portions on said second sliding movement position when said software for reproducing said moving pictures is started.

13. The portable terminal according to claim 1,
wherein
said first operating key is formed to display respective said display patterns in different colors when displaying said plurality of display patterns.

14. The portable terminal according to claim 1, so formed that a first operating key region (A) of said first operating key is exposed when said display portion-side housing is moved with respect to said operating portion-side housing in said first direction and located on said first sliding movement position and a second operating key region (B) of said first operating key is exposed when said display portion-side housing is moved with respect to said operating portion-side housing in said second direction and located on said second sliding movement position, wherein
said control portion is formed to display a first display pattern on said first operating key in said first operating key region in the state where said first operating key region is exposed and to display a second display pattern on said first operating key in said second operating key region in the state where said second operating key region is exposed.

15. The portable terminal according to claim 1,
wherein
said display portion-side housing further includes a second operating key (35) capable of switchably displaying a plurality of display patterns, and
said control portion is formed to switch said display patterns of said second operating key to correspond to said display patterns of said first operating key on said sliding movement position.
